# FASCICULE DE BREVET EUROPEEN

(11) **EP 0 613 000 B1**
(45) Date de publication et mention de la délivrance du brevet: **22.04.1998**
(21) Numéro de dépôt: 94400355.7
(22) Date de dépôt: 18.02.1994
(51) Int. Cl.: G01N 25/68

(54) **Procédé et dispositif pour déterminer la condensation sur une surface**
Verfahren und Vorrichtung zur Bestimmung der Kondensation auf einer Oberfläche
Method and apparatus for determining condensation on a surface

(30) Priorité: 24.02.1993 FR 9302099
(43) Date de publication de la demande: 31.08.1994
(73) Titulaire: IMRA EUROPE S.A., F-06560 Valbonne (FR)
(72) Inventeur: Gschwind, Michel, F-06130 Grasse (FR); Ancey, Pascal, F-06650 Le Rouret (FR)
(74) Mandataire: Leszczynski, André

(56) Documents cités:
- WO-A-92/18854
- GB-A- 2 036 339
- US-A- 4 240 284
- US-A- 4 435 091
- US-A- 4 579 462

## Description

La présente invention concerne un procédé pour détecter un risque de condensation d'eau sur une surface se trouvant au contact d'un volume d'air humide, et un dispositif pour mettre en oeuvre ce procédé.

On sait que le phénomène de condensation de la vapeur d'eau sur une surface résulte notamment d'une diminution de température de ladite surface ou d'une augmentation de la quantité de vapeur d'eau présente dans l'air.

Il est avantageux de pouvoir détecter à l'avance un risque de condensation dans de nombreuses situations, par exemple sur les surfaces vitrées d'une serre, d'une habitation, d'un véhicule automobile où dans d'autres domaines sans aucune limitation.

On connaît déjà des dispositifs permettant de déceler les conditions précédant la formation de condensation d'eau sur des surfaces.

En particulier, US-A-4 240 284 et GB-A-2 036 339 décrivent des procédés et dispositifs utilisant un miroir chauffé puis refroidi sur lequel un gaz peut se condenser en modifiant les propriétés de réflexion du miroir, ce qui permet à des capteurs optiques de déterminer à partir de quelle température le gaz se condense.

Ces procédés connus mettent en oeuvre les étapes définies au préambule de la revendication 1.

De tels dispositifs présentent l'inconvénient que leur précision et leur fiabilité ne sont pas toujours satisfaisantes.

La présente invention vise à fournir un nouveau procédé permettant de déceler avec une grande fiabilité, et d'une manière particulièrement simple, les conditions précédant la formation de condensation d'eau sur une surface.

Le procédé selon l'invention peut s'appliquer à la détection d'un risque de condensation sur la surface d'un objet quelconque placé dans un volume d'air humide.

En particulier, si la température de surface de l'objet en question est identique à la température de l'air humide, la détection d'un risque de condensation peut permettre de détecter le point de rosée du volume d'air humide.

La présente invention a pour objet un procédé pour détecter un risque de condensation d'eau sur une surface se trouvant au contact d'un volume d'air humide, caractérisé par le fait que l'on réalise les étapes suivantes :
a) on dispose sur la surface un élément sensible qui prend initialement une température correspondant sensiblement à celle de la surface,
b) on provoque sur cet élément sensible, à l'aide d'un moyen de chauffage, une première phase de chauffage jusqu'à une température supérieure à la température de la surface,
c) on provoque une phase de refroidissement, sur l'élément sensible, caractérisé par le fait que l'on provoque la phase de refroidissement à l'aide d'un moyen de refroidissement de même puissance thermique que le moyen de chauffage le refroidissement s'effectuant jusqu'à une température inférieure à la température de la surface,
et que l'on exécute l'étape supplémentaire suivante :
d) on effectue une comparaison entre le rapport de la durée de la première phase de chauffage à l'élévation de la température au cours du chauffage et le rapport de la durée de la phase de refroidissement à la diminution de température au cours du refroidissement, une différence notable entre ces deux rapports étant significative d'un risque de condensation sur la surface.

Selon l'invention, l'existence d'une différence entre les deux rapports relatifs l'un à la première phase de chauffage, l'autre à la phase de refroidissement, traduit le fait qu'il se produit une condensation sur l'élément sensible lors du refroidissement.

En effet, l'énergie nécessaire pour refroidir et condenser une certaine quantité de vapeur, pour un écart de température donné, est supérieure à l'énergie nécessaire pour chauffer cette même quantité de vapeur avec un écart de température identique, mais sans changement d'état.

Or, étant donné que le moyen de chauffage et le moyen de refroidissement possèdent la même puissance thermique, cet écart d'énergie se traduit par un écart de durée entre la phase de chauffage et la phase de refroidissement.

Dans un mode de mise en oeuvre préféré de l'invention, on fixe à l'avance la température haute correspondant à la température de l'élément sensible à la fin de la première phase de chauffage, ainsi que la température basse correspondant à la température de l'élément sensible à la fin de la phase de refroidissement.

On comprend que le choix d'un grand écart de température conduit à une détection très précoce du risque de condensation sur la surface.

Au contraire, si l'on choisit un écart de température relativement faible, le risque de condensation est diagnostiqué avec une avance très faible par rapport à l'instant réel d'apparition de condensation sur la surface.

Avantageusement, selon ce mode de mise en oeuvre, on choisit les températures haute et basse de sorte que les variations de température de l'élément sensible possèdent une amplitude symétrique par rapport à la température de la surface (Tinit).

En d'autres termes, on fixe les températures haute et basse en ajoutant, et respectivement en retranchant, un écart de température Δ T prédéterminé à la température Tinit de la surface.

Dans ce cas, si la première phase de chauffage consiste à élever la température de l'élément sensible de la valeur Tinit à la valeur Tinit+ ΔT, et si la phase de refroidissement consiste à abaisser la température de l'élément sensible de la valeur Tinit+ Δ T à Tinit- Δ T, la durée t_{c} de la première phase de chauffage doit être sensiblement égale à la moitié de la durée t_{f} de la phase de refroidissement.

Dans le cas contraire, c'est-à-dire si la durée de refroidissement t_{f} est supérieure à deux fois la durée du chauffage t_{c}, il y a eu condensation pendant le refroidissement, ce qui signifie que le risque de condensation sur la surface est important.

Dans un mode de mise en oeuvre préféré de l'invention, on ne mesure pas la température absolue de l'élément sensible, mais seulement ses variations de température, à savoir + Δ T lors du chauffage et -2 ΔT lors du refroidissement.

Ce mode de mise en oeuvre de l'invention est particulièrement intéressant du fait que les instruments de mesure fournissent des paramètres, notamment des grandeurs électriques, qui sont caractéristiques des variations de température de l'élément sensible. Il est donc inutile d'étalonner les instruments de mesure utilisés.

Dans un mode de mise en oeuvre préféré de l'invention, on exécute, après la phase de refroidissement, une seconde phase de chauffage de l'élément sensible à l'aide du moyen de chauffage, de manière à ramener la température dudit élément sensible à celle qu'il avait avant la phase de refroidissement.

On peut ainsi soumettre l'élément sensible à une succession de cycles thermiques composés chacun d'une phase de refroidissement et d'une seconde phase de chauffage.

En l'absence de condensation, la durée totale du cycle est sensiblement égale au quadruple de la durée de la première phase de chauffage, alors qu'en cas de condensation, la phase de refroidissement et la seconde phase de chauffage voient chacune leur durée s'allonger.

Une variante d'exécution du procédé consiste alors à comparer la durée de la première phase de chauffage au quart de la durée totale d'un tel cycle, et à soumettre l'élément sensible à des cycles successifs, jusqu'à ce que cette durée devienne supérieure à celle de la première phase de chauffage. Il y a alors risque de condensation.

On peut remarquer que, dans ce cas, la sensibilité est meilleure car à la fois la condensation durant le refroidissement mais également l'évaporation durant le chauffage sont prises en compte.

En outre dans cette variante, la mesure de la durée de la première phase de chauffage n'est effectuée qu'une fois, pour être utilisée ultérieurement lors de cycles successifs.

Selon une autre variante, on pourrait mémoriser la durée totale d'un cycle dont on sait qu'il n'a donné lieu à aucune condensation, et comparer la durée des cycles ultérieurs à cette durée mémorisée.

Selon un mode de mise en oeuvre particulier, on interrompt régulièrement la succession de cycles par une phase de repos pendant laquelle ni l'élément sensible ni la surface n'est plus soumis à aucun chauffage ou refroidissement de la part du moyen de chauffage ou du moyen de refroidissement, de manière à ce qu'ils reprennent une température stable fonction des conditions environnantes, avant de subir à nouveau, d'abord une première phase de chauffage, puis des cycles thermiques successifs.

Selon l'invention, il est préférable que la surface sur laquelle on désire effectuer la détection possède une constante de temps thermique importante par rapport à celle de l'élément sensible. De cette manière, les différents cycles de température appliqués à l'élément sensible ne modifient la température de la surface que d'une façon négligeable.

Si cette condition n'était pas vérifiée, la zone de la surface avoisinant l'élément sensible subirait des oscillations thermiques de même amplitude que celles de l'élément sensible.

On peut également mettre en oeuvre l'invention en remplaçant la phase de refroidissement par la seconde phase de chauffage.

Dans ce cas, la comparaison s'effectue entre le rapport de la durée de la première phase de chauffage à l'élévation de température au cours de la première phase de chauffage et le rapport de la durée de la seconde phase de chauffage à l'élévation de température au cours de la seconde phase de chauffage.

La puissance thermique du moyen de refroidissement est alors indifférente et n'influe pas sur la validité de la comparaison.

Dans cette mise en oeuvre de l'invention, il est avantageux de comparer la durée totale d'un cycle à celle d'un cycle antérieur dont on sait qu'il n'a donné lieu à aucune condensation.

Dans un mode de mise en oeuvre préféré de l'invention, on utilise un module à effet Peltier comme élément sensible et comme moyens de chauffage et de refroidissement.

L'une des faces du module à effet Peltier est appliquée contre la surface sur laquelle on veut détecter un risque de condensation. L'autre face du module à effet Peltier, en contact avec l'air, est utilisée comme élément sensible.

Il suffit alors d'inverser le sens du courant d'alimentation du module à effet Peltier pour refroidir ou chauffer sa face utilisée comme élément sensible.

En outre, les variations de température du module à effet Peltier peuvent être déterminées de manière continue à partir de la mesure de la tension aux bornes du module à effet Peltier.

De ce fait, l'utilisation d'un module à effet Peltier est particulièrement adaptée pour exécuter la mise en oeuvre préférée de l'invention dans laquelle on ne mesure aucune grandeur caractéristique de la température absolue de l'élément sensible, mais seulement des grandeurs caractéristiques des écarts de température entre cet élément sensible et la surface.

On sait en effet que la tension aux bornes d'un module à effet Peltier, alimenté par un courant donné, comporte une composante résistive résultant de la résistance interne dudit module à effet Peltier, et une composante induite par la différence de température entre les deux faces du module. Cette composante induite, due à l'effet Seebeck, est désignée sous le terme de composante Seebeck.

La mesure de cette composante Seebeck permet de suivre les variations de la température du module à effet Peltier.

Il suffit donc d'isoler cette composante Seebeck, en retranchant la composante résistive au signal de la tension aux bornes du module à effet Peltier, et de comparer son amplitude à des valeurs de tension haute et basse prédéterminées, pour détecter à quel moment du cycle la face du module à effet Peltier servant d'élément sensible présente, par rapport à la surface, un écart de température donné.

Selon une variante préférée, on retranche la totalité de la composante résistive, c'est-à-dire la composante résistive prise à la température initiale de la surface, ainsi que les variations de cette composante résistive, dues aux variations de température du module à effet Peltier.

La détermination des variations de température de l'élément sensible par mesure de la tension aux bornes du module à effet Peltier est particulièrement fiable car elle n'implique la présence d'aucun capteur thermométrique qui pourrait perturber la mesure.

La présente invention a également pour objet un dispositif pour mettre en oeuvre le procédé décrit ci-dessus, caractérisé par le fait qu'il comporte : un élément sensible apte à être appliqué contre la surface et à prendre une température sensiblement égale à celle de la surface, un moyen de chauffage et un moyen de refroidissement aptes à chauffer et respectivement à refroidir ledit élément sensible, un moyen de mesure de la température de l'élément sensible, un comparateur de la température mesurée de l'élément sensible avec des valeurs haute et basse fixées à l'avance, un organe de commande qui déclenche au moins une première phase de chauffage jusqu'à ce que la température de l'élément sensible ait atteint la valeur haute, puis une phase de refroidissement jusqu'à ce que la température de l'élément sensible ait atteint la valeur basse, une horloge pour mesurer la durée de la phase de chauffage et celle de la phase de refroidissement, et un comparateur pour comparer le rapport de la durée de chauffage à l'élévation de température au cours du chauffage et le rapport de la durée de refroidissement à la baisse de température au cours du refroidissement, le comparateur avertissant du risque de condensation en cas de différence notable entre ces deux rapports.

Dans un mode de réalisation préféré, le dispositif comporte, comme élément sensible, comme moyen de refroidissement et comme moyen de chauffage, un module à effet Peltier.

Dans ce cas, un circuit électronique permet de commander l'alimentation du module à effet Peltier.

Ce circuit électronique détermine les durées des phases de chauffage et de refroidissement en comparant l'amplitude de la composante Seebeck de la tension présente aux bornes du module à effet Peltier, qui résulte des écarts de température entre les deux faces du module à effet Peltier, à des valeurs de tension haute et basse prédéterminées.

Dans le but de mieux faire comprendre l'invention, on va en décrire maintenant deux modes de mise en oeuvre particuliers ainsi que deux modes de réalisations particuliers donnés à titre d'exemple et sans aucun caractère limitatif, en référence au dessin annexé dans lequel :
- les figures 1 et 2 représentent les variations de température de l'élément sensible en fonction du temps lors d'un premier mode de mise en oeuvre du procédé de l'invention,
- la figure 3 est un schéma fonctionnel d'un dispositif utilisable pour ce premier mode de mise en oeuvre du procédé de l'invention,
- la figure 4 est un organigramme des différentes étapes du premier mode de mise en oeuvre du procédé de l'invention,
- la figure 5 représente les variations de température de l'élément sensible et de la surface en fonction du temps lors d'un second mode de mise en oeuvre du procédé de l'invention,
- les figures 6a et 6b représentent un dispositif utilisable pour ce second mode de mise en oeuvre du procédé de l'invention,
- la figure 7 représente la tension aux bornes du dispositif des figures 6a et 6b,
- la figure 8 représente schématiquement un circuit électronique pour l'alimentation en courant du dispositif des figures 6a et 6b, et
- la figure 9 représente les différentes étapes du second mode de mise en oeuvre du procédé de l'invention.

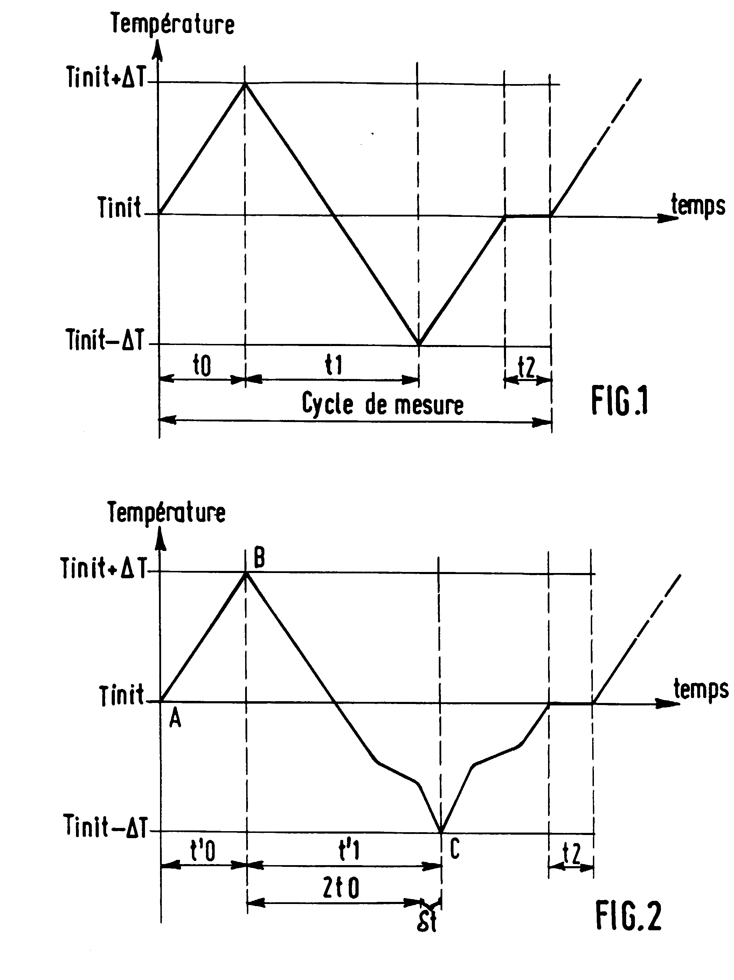

Sur les figures 1 et 2, la valeur Tinit représente la température initiale de l'élément sensible, c'est-à-dire la température de la surface sur laquelle on désire détecter un risque de condensation.

Conformément à une mise en oeuvre particulière du procédé selon l'invention, on a prédéterminé la valeur maximale et la valeur minimale des variations thermiques en ajoutant, respectivement en retranchant, un écart de température Δ T à la valeur Tinit.

La première phase de chauffage s'étend sur une période t₀ , et le cycle thermique comporte une phase de refroidissement s'étendant sur une période t₁, ainsi qu'une seconde phase de chauffage, interrompue par une phase de repos s'étendant sur une période t₂.

L'élévation de température au cours du premier chauffage est de Δ T, l'abaissement de température au cours du refroidissement est de 2 ΔT.

De ce fait, dans le cas de la figure 1 où il n'apparaît aucune condensation lors du refroidissement, la durée du refroidissement t₁ est sensiblement égale au double de la durée de la première phase de chauffage t₀.

En revanche, sur la figure 2, on voit clairement l'apparition d'un palier de température correspondant à la phase de condensation de la vapeur en eau liquide.

Ce palier de température, qui n'est pas mesurable directement dans le procédé selon la présente invention, est mis en évidence par le fait que la durée du refroidissement t'₁ présente un écart δ t avec le double de la durée de chauffage t₀.

D'une façon schématique, si l'on appelle A, B, C les points de coordonnées respectives (0,Tinit), (t₀, Tinit+ ΔT), (t₀+t'₁, Tinit- Δ T) sur la figure 2, le procédé selon l'invention consiste à comparer la valeur absolue de la pente de la droite AB à celle de la droite BC.

Bien que la phase de repos t₂ ait été représentée au cours des secondes phases de chauffage sur les figures 1 et 2, une telle phase de repos pourrait n'apparaître que de façon périodique.

En l'absence de cette phase de repos, la seconde phase de chauffage a une durée égale à celle de la phase de refroidissement.

Il en résulte que chaque cycle a une durée égale à 2t₁, respectivement 2t'₁, et que l'on pourrait, selon une variante de mise en oeuvre de l'invention, comparer t₀ au quart de la durée totale du cycle.

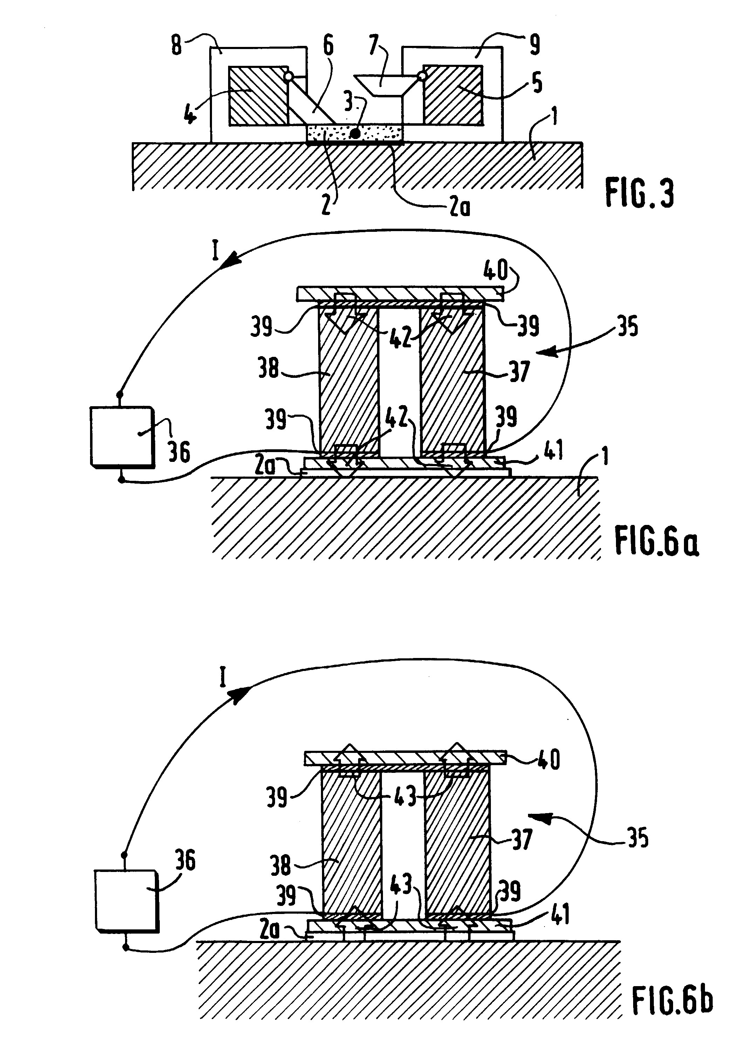

La figure 3 représente schématiquement un dispositif permettant une mise en oeuvre du procédé qui vient d'être décrit.

Sur une surface 1, on dispose un élément sensible 2 en un matériau à très forte conductivité thermique qui adhère intimement à la surface 1, par exemple par l'intermédiaire d'un adhésif thermoconducteur 2a.

Au coeur de l'élément sensible 2, un capteur thermométrique 3 fournit un signal électrique caractéristique de la température dudit élément sensible 2.

De part et d'autre de l'élément sensible 2, se situent une source froide 4 et une source chaude 5 qui peuvent chacune échanger de l'énergie thermique avec l'élément sensible 2, par l'intermédiaire de conducteurs thermiques 6 et 7 aptes à entrer alternativement en contact avec l'élément sensible 2. Sur la figure 3, le conducteur thermique 6 véhicule de l'énergie thermique entre l'élément sensible 2 et la source froide 4.

Des enceintes isolantes 8 et 9 évitent tout transfert d'énergie thermique entre les sources froide 4 et chaude 5, d'une part, et la surface 1 ou le milieu extérieur d'autre part.

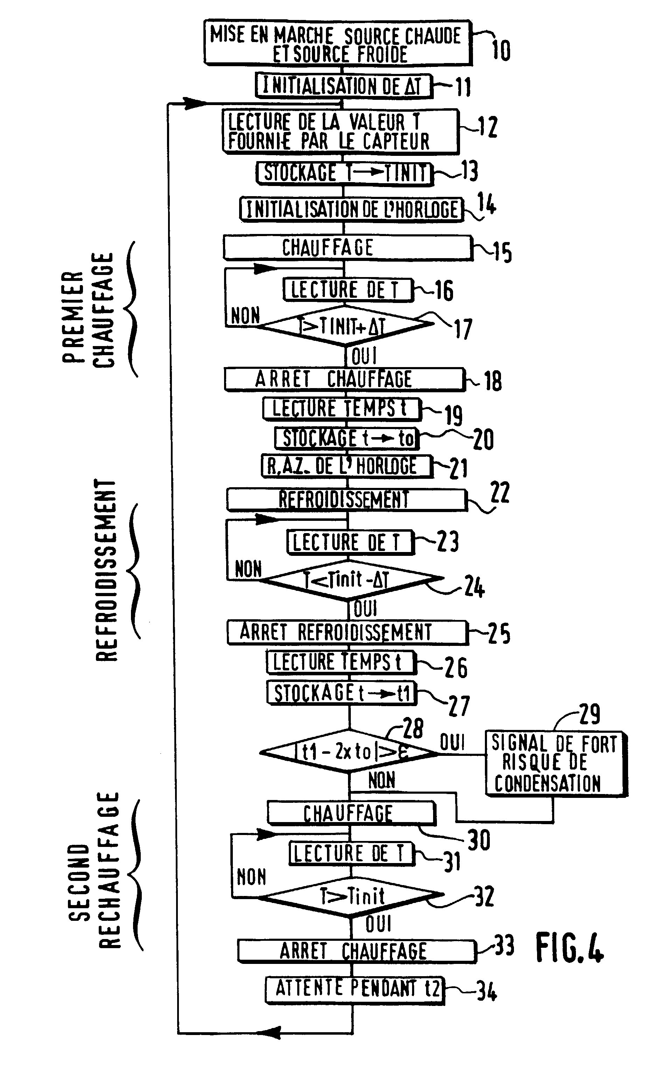

Le fonctionnement du dispositif de la figure 3 suit les étapes représentées à la figure 4.

Après mise en marche des sources froide 4 et chaude 5, au cours d'une étape 10, on choisit la valeur Δ T qui caractérise l'avance de la détection par rapport à l'apparition du phénomène de condensation, au cours d'une étape 11.

L'étape suivante 12 constitue l'étape de mesure de la température Tinit de l'élément sensible, qui est ensuite mémorisée à l'étape 13.

A l'étape 14, on démarre le comptage du temps de chauffage par initialisation d'une horloge.

A l'étape 15, on chauffe l'élément sensible 2 par mise en contact avec le conducteur thermique 7 de la source chaude 5.

Les étapes 16 et 17 constituent une boucle d'attente jusqu'à ce que la température de l'élément sensible 2 ait atteint la valeur Tinit + ΔT.

A l'étape 18, le chauffage est arrêté, par retrait du conducteur thermique 7 de l'élément sensible 2.

On mesure et l'on mémorise la durée du chauffage t₀ aux étapes 19 et 20.

L'horloge est à nouveau mise à zéro à partir de l'étape 21.

A l'étape 22, on commence le refroidissement de l'élément sensible jusqu'à ce qu'il ait atteint la température Tinit - ΔT (étapes 23 et 24). A cet effet, le conducteur thermique 6 est mis au contact de l'élément sensible 2.

A l'étape suivante 25, on cesse le refroidissement en retirant le conducteur thermique 6 de l'élément sensible 2 et aux étapes 26 et 27, on lit sur l'horloge la durée du refroidissement t₁ que l'on mémorise.

L'étape 28 correspond à la comparaison entre la durée de refroidissement t₁ et le double de la durée de chauffage t₀. ε représente l'erreur de mesure tolérable en-dessous de laquelle ces deux valeurs sont considérées comme égales.
- En cas de différence entre t₁ et 2t₀ à ε près, on exécute l'étape 29 qui indique le déclenchement d'un signal du risque de condensation important.
- En cas d'égalité entre t₁ et 2 t₀ à ε près, on passe à l'étape suivante.

L'élément sensible 2 est ramené à une température voisine de Tinit au cours des étapes 30 à 33.

Pendant l'étape 34, l'élément sensible 2 et la surface 1 sont laissés en dehors des contraintes thermiques des sources chaude et froide, afin qu'ils reprennent une température stable fonction des conditions environnantes.

Avantageusement, la durée t₂ est de l'ordre de 5 fois la constante de temps du système.

Le retour à l'étape 21 réitère le cycle thermique de détection.

On peut noter qu'il n'est pas nécessaire d'étalonner le capteur thermométrique 3 du fait que les seules mesures à effectuer correspondent à des variations de température.

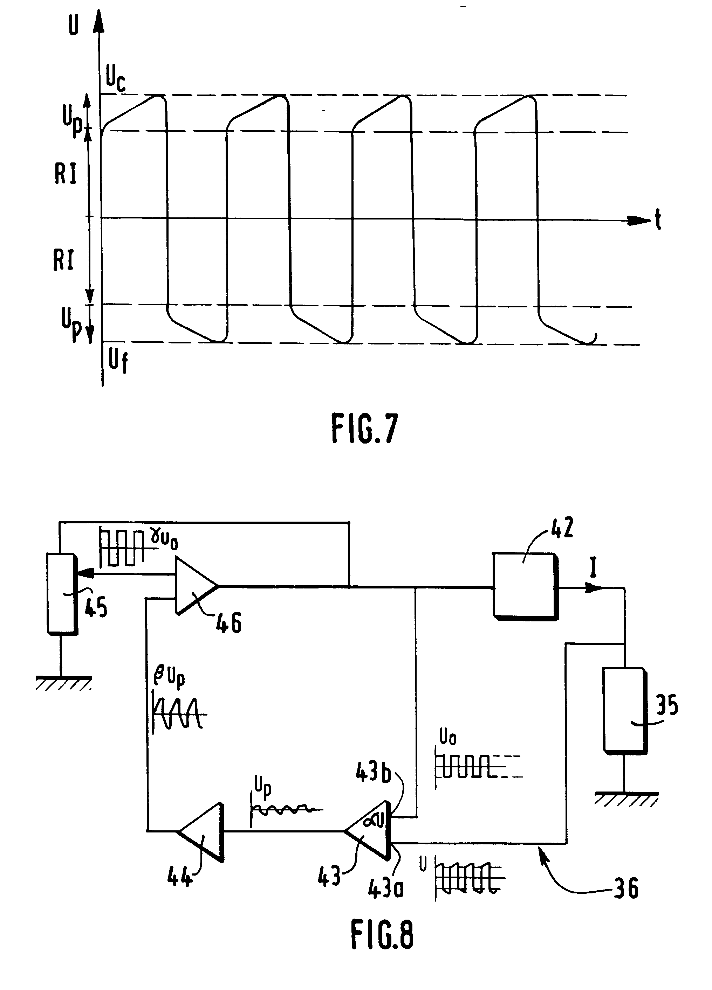

Sur les figures 6a et 6b, on a représenté un dispositif selon un autre mode de réalisation de l'invention, qui exécute un second mode de mise en oeuvre du procédé de l'invention.

Dans ce dispositif, l'élément sensible 2, le capteur thermométrique 3, ainsi que les sources froide 4 et chaude 5 de la figure 3 sont remplacés par un module à effet Peltier 35.

Un circuit électronique 36 fournit le courant I nécessaire au fonctionnement du module 35.

Ce dernier se compose de deux éléments semi-conducteurs 37 et 38 dopés N et respectivement P, qui sont électriquement raccordés en série par des électrodes 39 et maintenus entre eux par des plaques support 40 et 41 situées à leurs extrémités supérieure et inférieure.

Le module à effet Peltier 35 est collé sur la surface 1 à l'aide d'un adhésif thermoconducteur 2a.

Sur la figure 6a, le sens du courant I est tel que la plaque supérieure 40, qui sert d'élément sensible au sens de l'invention, se refroidit comme le montrent des flèches 42 qui matérialisent le flux de chaleur.

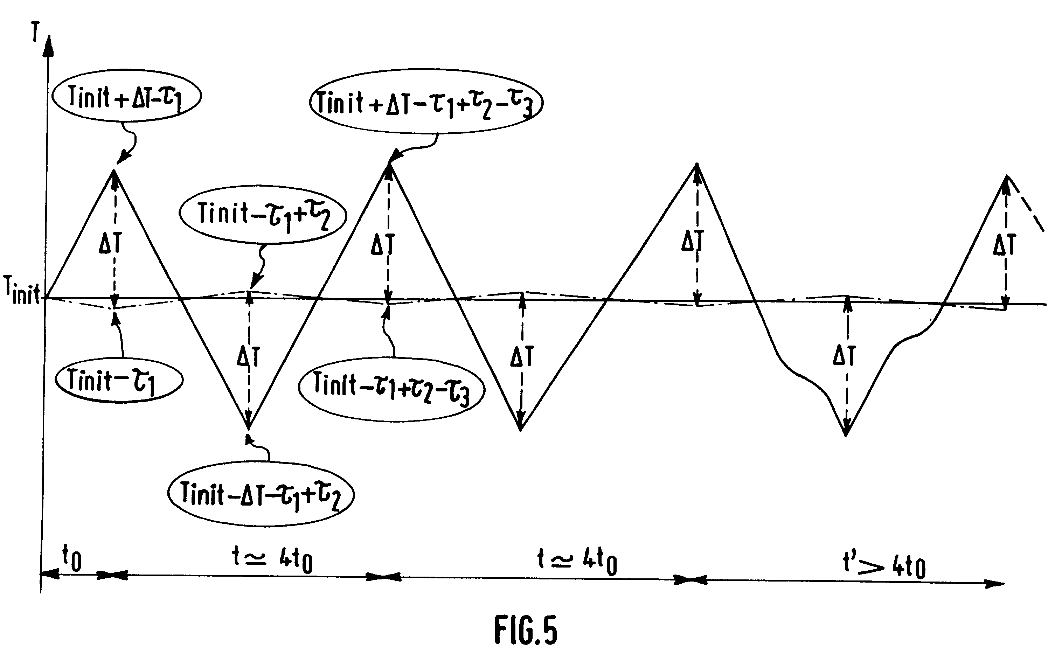

Inversement, les flèches 43 sur la figure 6b représentent le transfert de quantité de chaleur vers ladite plaque supérieure 40, le sens du courant I ayant été inversé par rapport à la figure 5a.

Le circuit électronique 36 permet d'inverser le sens du courant d'alimentation du module à effet Peltier à chaque fois que la plaque supérieure 40 de ce dernier présente, par rapport à la surface 1, une différence de température donnée.

La figure 5 représente les variations de température de la plaque supérieure 40 (en traits continus) et celles de la surface 1 (en traits mixtes) au cours de cycles successifs.

Grâce à la présence du module à effet Peltier 35, les variations de température de la plaque supérieure 40 peuvent être évaluées sans mesure directe de température, par mesure de la tension aux bornes du module à effet Peltier 35, après retranchement de la composante résistive de cette tension, comme il sera expliqué en référence aux figures 7 et 8.

Ce dispositif permet de mettre en oeuvre la variante de l'invention selon laquelle on mesure la durée d'une première phase de chauffage et l'on compare cette durée au quart de la durée totale de cycles successifs comportant chacun une phase de refroidissement et une seconde phase de chauffage.

L'amplitude thermique des oscillations thermiques est environ de 2 ΔT.

Dans cette mise en oeuvre de l'invention, on ne mesure aucune température absolue, mais uniquement des écarts de température entre la plaque supérieure 40, qui sert d'élément sensible, et la surface 1.

Le module à effet Peltier 35 permet d'effectuer ces mesures d'une façon continue, à partir du signal de tension aux bornes de ce module.

Lors de la première phase de chauffage, on fait passer un courant I dans le module à effet Peltier, la plaque supérieure 40 est chauffée tandis que la surface 1 est refroidie.

Compte-tenu des différences importantes de constante de temps thermique entre la surface 1 et la plaque supérieure 40, ladite plaque atteint une température de Tinit+ Δ T- τ₁, τ₁ étant très petit par rapport à Δ T, tandis que la surface 1 atteint une température de Tinit -τ₁.

La tension aux bornes du module à effet Peltier ne permet pas de mesurer la température absolue de la plaque supérieure 40, mais permet de détecter que l'écart de température entre cette dernière et la surface 1 est égale à ΔT.

La durée t₀ de cette première phase de chauffage est mémorisée.

On inverse ensuite le sens du courant I, de manière à provoquer le refroidissement de la plaque supérieure 40. La surface 1 subit alors un léger chauffage τ₂, τ₂ étant très petit par rapport à ΔT.

La tension aux bornes du module à effet Peltier permet de détecter le moment où l'écart de température entre la plaque supérieure 40 et la surface 1 atteint à nouveau Δ T, c'est-à-dire que la température de la plaque supérieure 40 est égale à Tinit - Δ T - τ₁ + τ₂, 1 est tandis que celle de la surface égale à Tinit -τ₁+ τ₂.

On provoque alors un second chauffage de la plaque 40, de la même façon que précédemment pour la ramener à une température Tinit + Δ T - τ₁ + τ₂ - τ₃, τ₃ étant très petit par rapport à ΔT, la surface étant revenue à la température Tinit -τ₁+τ₂-τ₃.

Le système est de préférence conçu de telle sorte que - τ₁ + τ₂- τ₃, qui représente la dérive en température du système, soit le plus petit possible.

On compare enfin la durée totale t du cycle constitué par la phase de refroidissement et la seconde phase de chauffage au quadruple de la durée t₀ de la première phase de chauffage, pour conclure ou non à un risque de condensation, comme dans le cas précédent.

Sur la figure 5, on a représenté deux cycles sans changement d'état dont la durée t est sensiblement égale à 4t₀, et un cycle avec changement d'état, dont la durée t' est supérieure à 4t₀.

En cas d'absence de risque de condensation, un nouveau cycle est effectué, dont la durée t sera comparée au quadruple de la durée t₀ de la même première phase de chauffage.

De façon régulière, par exemple tous les 30 cycles, on interrompt l'exécution des cycles pour laisser la surface et l'élément sensible reprendre une température stable fonction des conditions environnantes, de manière à annuler la dérive en température.

On provoque alors un nouveau chauffage de la plaque supérieure avant de reprendre la succession de cycles.

On a représenté sur la figure 7 un diagramme des variations en fonction du temps de la tension U aux bornes du module à effet Peltier 35.

La tension U se décompose en une composante résistive U_{R} = RI et une composante Seebeck Up.

Le circuit électronique 36, représenté schématiquement à la figure 8, détermine l'instant où la tension Up atteint la valeur Uc ou Uf, selon le sens du courant I circulant dans le module à effet Peltier 35.

Le circuit 36 comporte un générateur de courant 42 relié au module à effet Peltier, un soustracteur 43, un amplificateur 44, un potentiomètre 45, et un comparateur 46.

Les éléments 43, 44 et 46 peuvent être réalisés concrètement par des amplificateurs opérationnels.

Pour chaque borne d'un élément du circuit 36, on a représenté le signal de la tension présente à cette borne.

Le fonctionnement du circuit 36 va maintenant être décrit.

Le générateur de courant 42 envoie un courant I au module à effet Peltier 35.

La tension aux bornes de ce dernier appliquée à la borne 43a du soustracteur 43 est rappelée par le diagramme U.

Le soustracteur 43 élimine la composante résistive du signal U en en soustrayant le signal carré Uo appliqué à sa borne 43b, le gain de l'amplificateur opérationnel 43 étant tel que l'amplitude du signal Uo est amenée à la valeur α Uo = RI avant d'être soustraite au signal U.

En sortie du soustracteur 43, la tension obtenue est Up, composante Seebeck de la tension du module à effet Peltier.

L'amplificateur 44 augmente l'amplitude du signal Up pour fournir un signal β Up.

Le potentiomètre 45 fixe également l'amplitude du signal Uo pour fournir un signal γ Uo dont l'amplitude, de -Uc à +Uf, correspond à une tension Seebeck aux bornes du module à effet Peltier obtenue quand l'écart de températures entre la plaque supérieure 40 et la surface 1 est égale à Δ T.

Uc et Uf sont les seuils de tension à partir desquels le sens du courant I doit être inversé.

La tension à la borne de sortie du comparateur 46 bascule à chaque fois que la tension β Up dépasse le seuil fixé par le signal γ Uo.

Ainsi, on obtient une auto-oscillation du circuit 36 et une alternance des phases de chauffage et de refroidissement pour le module à effet Peltier 35, sans qu'aucune mesure de température n'ait été nécessaire pour déterminer les crêtes des oscillations thermiques.

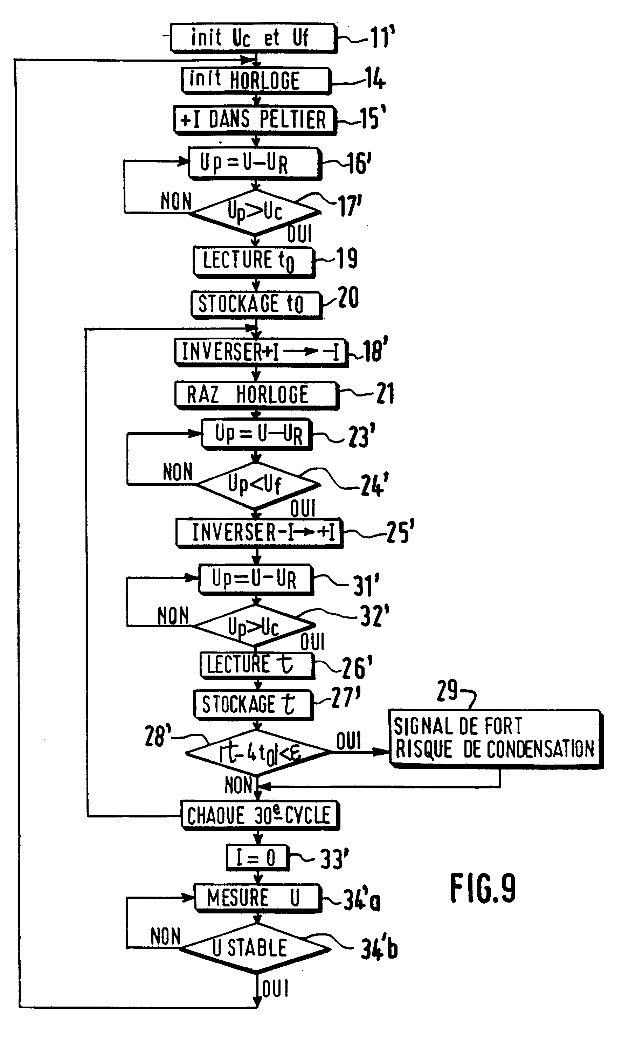

Les différentes étapes du procédé mis en oeuvre en utilisant le dispositif des figures 6a et 6b sont représentées à la figure 9 dans laquelle les mêmes chiffres de référence ont été conservés pour les étapes déjà décrites en référence à la figure 4.

Au cours d'une première étape 11', on prédétermine les tensions limites Uc et Uf correspondant à un écart de température Δ T entre les deux faces d'extrémité du module à effet Peltier 35.

Une horloge est initialisée au cours de l'étape suivante 14.

A l'étape 15', on commence le chauffage de la plaque supérieure 40 en envoyant un courant +I dans le module à effet Peltier.

Les étapes 16' et 17' constituent une boucle d'attente jusqu'à ce que l'écart de température entre la plaque supérieure 40 et la surface 1 soit égale à Δ T, c'est-à-dire jusqu'à ce que la tension Seebeck aux bornes du module à effet Peltier soit supérieure à la tension seuil Uc.

Aux étapes 19 et 20, on lit et on stocke la durée t₀ de cette première phase de chauffage.

Le cycle d'oscillation thermique commence à l'étape 18' à laquelle le courant I est inversé pour démarrer le refroidissement de la plaque supérieure 40.

L'horloge est remise à zéro à l'étape 21.

Les étapes 23' et 24' constituent une boucle d'attente jusqu'à ce que l'écart de température entre la plaque supérieure 40 et la surface 1 soit à nouveau égale à Δ T, c'est-à-dire jusqu'à ce que la tension Seebeck aux bornes du module à effet Peltier soit inférieure à la tension de seuil Uf.

Les étapes 25', 31' et 32' réalisent la seconde phase de chauffage qui se déroule de façon analogue à la phase de refroidissement.

Aux étapes 26' et 27', on lit et on stocke la durée t du cycle ainsi réalisé.

A l'étape 28', on compare la durée du cycle t au quadruple de la durée de la première phase de chauffage t₀. En cas de différence entre ces deux durées, on conclut à un risque de condensation sur la surface 1.

On recommence ensuite un cycle à partir de l'étape 18'.

Ce procédé conduisant de façon quasi inévitable à une dérive en température du système, il est préférable de marquer une pose de façon régulière pour laisser la surface et l'élément sensible reprendre une température stable fonction des conditions environnantes. A cet effet, on interrompt le passage du courant au cours d'une étape 33', et au cours d'étapes 34'a et 35'b, on attend que la tension U aux bornes du module à effet Peltier 35 se stabilise, ce qui signifie que la température du système a repris une valeur stable fonction des conditions environnantes, après quoi l'on reprend le procédé à partir de l'étape 14.

On peut noter que les courants d'alimentation +I et -I décrits ici peuvent éventuellement présenter des valeurs absolues différentes, la tension de chauffage |Ic| étant inférieure à la tension de refroidissement |If|, de manière à compenser la libération d'énergie thermique produite par effet Joule dans le module à effet Peltier.

Dans la variante d'exécution où l'on compare la première phase de chauffage, non pas à la phase de refroidissement, mais à la seconde phase de chauffage, un même courant I peut-être utilisé pour alimenter le module à effet Peltier 35 dont la puissance thermique de chauffage peut alors être différente de la puissance thermique de refroidissement.

Une fois que le premier cycle a ainsi été identifié comme ne donnant lieu à aucun changement d'état, on peut comparer sa durée à celle des cycles ultérieurs.

## Revendications

1. Procédé pour détecter un risque de condensation d'eau sur une surface se trouvant en contact d'un volume d'air humide, selon lequel on réalise les étapes suivantes :
a) on dispose sur la surface (1) un élément sensible (2;40) qui prend initialement une température correspondant sensiblement à celle de la surface (1),
b) on provoque sur cet élément sensible (2;40), à l'aide d'un moyen de chauffage (5,7;35), une première phase de chauffage jusqu'à une température supérieure à la température de la surface (1),
c) on provoque une phase de refroidissement sur l'élément sensible (2;40), caractérisé par le fait que l'on provoque la phase de refroidissement à l'aide d'un moyen de refroidissement (4,6;35) de même puissance thermique que le moyen de chauffage (5,7;35), le refroidissement s'effectuant jusqu'à une température inférieure à la température de la surface (1),
et que l'on exécute l'étape supplémentaire suivante :
d) on effectue une comparaison entre le rapport de la durée de la première phase de chauffage (t₀) à l'élévation de température au cours du chauffage (ΔT) et le rapport de la durée de la phase de refroidissement (t₁, t'₁) à la diminution de température au cours de refroidissement (2 ΔT), une différence notable entre ces deux rapports étant significative d'un risque de condensation sur la surface (1)

2. Procédé selon la revendication 1, caractérisé par le fait que l'on fixe à l'avance la température haute correspondant à la température de l'élément sensible (2;40) à la fin de la première phase de chauffage en ajoutant un écart de température (ΔT) prédéterminé à la température (Tinit) de la surface (1) et que l'on fixe la température basse correspondant à la température de l'élément sensible (2;40) à la fin de la phase de refroidissement en retranchant le même écart de température (ΔT) prédéterminé à la température (Tinit) de la surface (1), et que l'on compare la durée (t₀) de la première phase de chauffage à la moitié de la durée (t₁) de la phase de refroidissement.

3. Procédé selon la revendication 2, caractérisé par le fait que l'on exécute , après la phase de refroidissement, une seconde phase de chauffage de l'élément sensible (1) à l'aide d'un moyen de chauffage (5,7;35), de manière à ramener la température de l'élément sensible (1) à celle qu'il avait (Tinit+ ΔT) avant la phase de refroidissement.

4. Procédé selon la revendication 3, caractérisé par le fait que l'on compare la durée (t₀) de la première phase de chauffage au quart de la durée totale (t) d'un cycle constitué par une phase de refroidissement et une seconde phase de chauffage.

5. Procédé selon la revendication 3, caractérisé par le fait que l'on effectue la comparaison entre la première phase de chauffage et la seconde phase de chauffage.

6. Procédé selon l'une quelconque des revendications 3 à 5, caractérisé par le fait que l'on mémorise la durée totale d'un cycle dont on sait qu'il n'a donné lieu à aucune condensation, et que l'on compare la durée des cycles ultérieurs à cette durée mémorisée.

7. Procédé selon l'une quelconque des revendications 1 à 6, caractérisé par le fait que l'on utilise un module à effet Peltier (35) comme élément sensible et comme moyen de chauffage et de refroidissement, les variations de température de l'élément sensible étant évaluées par mesure de la composante Seebeck de la tension aux bornes du module à effet Peltier (35).

8. Procédé selon la revendication 7, caractérisé par le fait que l'on obtient la composante Seebeck (Up) de la tension (U) aux bornes du module à effet Peltier (35) en éliminant une composante constante ( α Uo) représentative de la tension due à la résistance interne du module à effet Peltier (35) à température constante dans la tension (U) aux bornes du module à effet Peltier (35).

9. Procédé selon la revendication 7, caractérisé par le fait que l'on obtient la composante Seebeck (Up) de la tension (U) aux bornes du module à effet Peltier (35) en éliminant une composante variable due à la résistance interne du module à effet Peltier (35) à la température moyenne dudit module à effet Peltier (35) dans la tension (U) aux bornes de ce dernier.

10. Dispositif pour la mise en oeuvre du procédé selon l'une quelconque des revendications 1 à 9, comportant : un élément sensible (2) apte à être appliqué contre la surface (1) et à prendre une température sensiblement égale à celle de la surface (1), un moyen de chauffage (5,7) et un moyen de refroidissement (4,6) aptes à chauffer et respectivement refroidir ledit élément sensible (2), un moyen de mesure (3) de la température de l'élément sensible (2), un comparateur de la température mesurée dans l'élément sensible (2) avec des valeurs haute et basse fixées à l'avance, un organe de commande qui déclenche une phase de chauffage jusqu'à ce que la température de l'élément sensible (2) ait atteint la valeur haute, puis une phase de refroidissement jusqu'à ce que la température de l'élément sensible (2) ait atteint la valeur basse, caractérisé par le fait que le moyen de chauffage et le moyen de refroidissement présentent la même puissance thermique et par le fait que ledit dispositif comporte en outre une horloge pour mesurer la durée (t₀) de la phase de chauffage et celle (t₁) de la phase de refroidissement et un comparateur pour comparer le rapport de la durée de chauffage (t₀) à l'élévation de température au cours du chauffage (ΔT) et le rapport de la durée de refroidissement (t₁) à la baisse de température au cours du refroidissement (2 ΔT), le comparateur avertissant du risque de condensation en cas de différence notable entre ces deux rapports.

11. Dispositif pour la mise en oeuvre du procédé selon l'une quelconque des revendications 1 à 9, caractérisé par le fait qu'il comporte un module à effet Peltier (35) alimenté en courant (I) par un circuit électronique (36) qui inverse le sens du courant (I) chaque fois que la composante Seebeck (Up) de la tension (U) aux bornes du module à effet Peltier (35) dépasse une valeur prédéterminée (Uc, Uf).

## Patentansprüche

1. Verfahren zum Erfassen eines Kondensationsrisikos für Wasser auf einer Oberfläche, die sich in Berührung zu einem Volumen mit feuchter Luft befindet, welches die folgenden Abschnitte bzw. Schritte verwirklicht:
a) auf der Oberfläche (1) wird ein empfindliches Element (2; 40) angeordnet, das Anfangs eine Temperatur einnimmt, die genau der der Oberfläche (1) entspricht,
b) auf diesem empfindlichen Element (2; 40) wird mit Hilfe eines Heizmittels (5, 7; 35) eine erste Heizphase bis zu einer Temperatur eingeleitet, die über der Temperatur der Oberfläche (1) ist,
c) eine Abkühlphase wird auf dem empfindlichen Element (2; 40) eingeleitet, **gekennzeichnet** durch die Tatsache, daß die Abkühlphase mit Hilfe eines Mittels zum Abkühlen (4, 6; 35) mit der gleichen thermischen Leistungsfähigkeit wie das Heizmittel (5, 7; 35) eingeleitet bzw. durchgeführt wird, wobei die Abkühlung bis zu einer Temperatur unterhalb der Temperatur der Oberfläche (1) bewirkt wird,
wobei die folgenden zusätzlichen Abschnitte bzw. Schritte ausgeführt werden:
d) ein Vergleich zwischen dem Verhältnis der Dauer der ersten Heizphase (to) zur Anhebung der Temperatur während des Aufheizens (ΔT) und dem Verhältnis der Dauer der Abkühlphase (t₁, t'₁) zur Absenkung der Tempertur im Verlauf der Abkühlung (2 Δ T) wird durchgeführt, wobei eine merkliche Differenz zwischen den zwei Verhältnissen bzw. Werten für ein Risiko der Kondensation auf der Oberfläche (1) maßgeblich ist.

2. Verfahren nach Anspruch 1, **gekennzeichnet** durch die Tatsache, daß man im voraus die hohe Temperatur festlegt, die der Temperatur des empfindlichen Elements (2; 40) am Ende der ersten Phase des Aufheizens entspricht, indem eine Temperaturspanne bzw. -differenz (ΔT) die zu der Temperatur (Tinit) oder Oberfläche (1) vorbestimmt ist, hinzugefügt wird, und die niedere Tempertur festgelegt wird, die der Temperatur des empfindlichen Elements (2; 40) am Ende der Abkühlphase entspricht, indem die gleiche Temperaturspanne bzw. -differenz (ΔT), die zu der Temperatur (Tinit) der Oberfläche (1) vorbestimmt ist, abgezogen wird, und die Dauer (t₀) der ersten Heizphase mit dem Mittel der Dauer (t₁) der Abkühlphase verglichen wird.

3. Verfahren nach Anspruch 2, **gekennzeichnet** durch die Tatsache, daß nach der Abkühlphase eine zweite Heizphase des empfindlichen Elements (1) mit Hilfe eines Heizmittels (5, 7; 35) durchgeführt wird, derart, daß die Temperatur des empfindlichen Elements (1) auf die zurückgeführt wird, die (Tinit + ΔT) es vor der Abkühlphase hatte.

4. Verfahren nach Anspruch 3, **gekennzeichnet** durch die Tatsache, daß die Dauer (t₀) der ersten Heizphase mit einem Viertel der Gesamtdauer (t) eines Zyklus verglichen wird, der durch eine Abkühlphase und eine zweite Heizphase gebildet wird.

5. Verfahren nach Anspruch 3, **gekennzeichnet** durch die Tatsache, daß der Vergleich zwischen der ersten Heizphase und der zweiten Heizphase bewirkt bzw. durchgeführt wird.

6. Verfahren nach einem der Ansprüche 3 bis 5, **gekennzeichnet** durch die Tatsache, daß die Gesamtdauer eines Zyklus gespeichert wird, von dem bekannt ist, daß er keine Veranlassung für eine Kondensation gegeben hat, und daß die Dauer späterer Zyklen mit dieser gespeicherten Dauer verglichen wird.

7. Verfahren nach einem der Ansprüche 1 bis 6, **gekennzeichnet** durch die Tatsache, daß ein Peltierelement (35) als empfindliches Element und als Heiz- und Kühlmittel verwendet wird, wobei die Temperaturveränderungen des empfindlichen Elements durch Messen der Seebeck-Komponente der Dehnung der Grenzen bzw. Anschlußklemmen des Peltierelements (35) gemessen werden.

8. Verfahren nach Anspruch 7, **gekennzeichnet** durch die Tatsache, daß die Seebeck-Komponente (Up) der Dehnung (U) der Grenzen bzw. Anschlußklemmen des Peltierelements (35) durch Beseitigung einer Konstantkomponente (αUo) erhalten wird, die für die Dehnung aufgrund des inneren Widerstandes des Peltierelements (35) bei konstanter Temperatur in der Dehnung (U) der Grenzen bzw. Anschlüsse des Peltierelements (35) repräsentative ist.

9. Verfahren nach Anspruch 7, **gekennzeichnet** durch die Tatsache, daß man die Seebeck-Komponente (Up) der Dehnung (U) der Grenzen bzw. Anschlußklemmen oder Anschlüsse des Peltierelements (35) erhält, indem eine variable Komponente aufgrund des inneren Widerstandes des Peltierelements (35) zu der mittleren Temperatur des besagten Peltierelements (35) in der Dehnung (U) der Grenzen bzw. Anschlüsse des letzteren beseitigt wird.

10. Vorrichtung zur Verwirklichung des Verfahrens nach einem der Ansprüche 1 bis 9, die aufweist:
ein empfindliches Element (2), das vorgesehen ist, um gegen die Oberfläche (1) angesetzt zu werden und eine Temperatur genau aufzunehmen, die der der Oberfläche (1) gleich ist, ein Heizmittel (5, 7) und ein Kühlmittel (4, 6), die vorgesehen sind, um das empfindliche Element (2) zu heizen bzw. zu kühlen, ein Mittel zum Messen (3) der Temperatur des empfindlichen Elements (2), eine Komparatoreinrichtung für die in dem empfindlichen Element (2) gemessene Temperatur mit den im voraus festgelegten hohen und niedrigen Werten, ein Befehlsorgan, das eine Heizphase bis zu der die Temperatur des empfindlichen Elements (2) den hohen Wert erreicht hat, sowie dann eine Kühlphase bis zu der Temperatur des empfindlichen Elements (2) den niedrigen Wert erreicht hat, auslöst, **gekennzeichnet** durch die Tatsache, daß die Heizmittel und die Kühlmittel die gleiche thermische Leistungsfähigkeit haben, und durch die Tatsache, daß die besagte Vorrichtung außerdem eine Uhr zum Messen der Dauer (t₀) der Heizphase und der (t₁) der Kühlphase und einen Komparator bzw. eine Vergleichseinrichtung hat, um das Verhältnis der Heizdauer (t₀) zur Anhebung der Temperatur im Verlaufe des Heizens (ΔT) und das Verhältnis der Dauer des Kühlens (t₁) zur Absenkung der Temperatur im Verlauf der Kühlung (2 ΔT) zu vergleichen, wobei der Komparator das Risiko der Kondensation in dem Fall einer merklichen Differenz zwischen den zwei Verhältnissen vormeldet.

11. Vorrichtung nach einem der Ansprüche 1 bis 9, **gekennzeichnet** durch die Tatsache, daß sie ein Peltierelement (35) aufweist, das mit Strom (I) durch eine elektronische Schaltung (36) versorgt wird, die das Vorzeichen des Stromes (I) jedes Mal umkehrt, wenn die Seebeck-Komponente (Up) der Dehnung (U) der Grenzen bzw. Anschlüsse des Peltierelements (35) einen vorbestimmten Wert durchläuft (Uc, Uf).

## Claims

1. Process for detecting a risk of condensation of water on a surface lying in contact with a volume of humid air, according to which the following steps are carried out:
a) on the surface (1) is arranged a sensitive element (2; 40) which initially takes a temperature corresponding substantially to that of the surface (1),
b) a first phase of heating up to a temperature greater than the temperature of the surface (1) is effected on this sensitive element (2; 40) with the aid of a means of heating (5, 7; 35),
c) a phase of cooling is effected on the sensitive element (2; 40), characterized in that the cooling phase is effected with the aid of a means of cooling (4, 6; 35) having the same thermal power as the means of heating (5, 7; 35), the cooling taking place down to a temperature below the temperature of the surface (1),
and in that the following additional step is executed:
d) a comparison is made between the ratio of the duration of the first heating phase (to) to the rise in temperature during the heating (ΔT) and the ratio of the duration of the cooling phase (t₁, t'₁) to the reduction in temperature during cooling (2ΔT), an appreciable difference between these two ratios being indicative of a risk of condensation on the surface (1).

2. Process according to Claim 1, characterized in that the upper temperature corresponding to the temperature of the sensitive element (2; 40) at the end of the first heating phase is fixed in advance by adding a predetermined temperature deviation (ΔT) to the temperature (Tinit) of the surface (1); and in that the lower temperature corresponding to the temperature of the sensitive element (2; 40) at the end of the cooling phase is fixed by deducting the same predetermined temperature deviation (ΔT) from the temperature (Tinit) of the surface (1); and in that the duration (t₀) of the first heating phase is compared with half the duration (t₁) of the cooling phase.

3. Process according to Claim 2, characterized in that a second phase of heating of the sensitive element (1) with the aid of a means of heating (5, 7; 35) is carried out after the cooling phase, in such a way as to bring the temperature of the sensitive element (1) back to that which it had (Tinit+ΔT) before the cooling phase.

4. Process according to Claim 3, characterized in that the duration (t₀) of the first heating phase is compared with a quarter of the total duration (t) of a cycle consisting of a cooling phase and of a second heating phase.

5. Process according to Claim 3, characterized in that the comparison is made between the first heating phase and the second heating phase.

6. Process according to any one of Claims 3 to 5, characterized in that the total duration of a cycle which is known not to have given rise to any condensation is stored; and in that the duration of the subsequent cycles is compared with this stored duration.

7. Process according to any one of Claims 1 to 6, characterized in that a Peltier effect module (35) is used as sensitive element and as means of heating and cooling, the temperature variations of the sensitive element being evaluated by measuring the Seebeck component of the voltage at the terminals of the Peltier effect module (35).

8. Process according to Claim 7, characterized in that the Seebeck component (Up) of the voltage (U) at the terminals of the Peltier effect module (35) is obtained by eliminating a constant component (aUo) representative of the voltage due to the internal resistance of the Peltier effect module (35) at constant temperature in the voltage (U) at the terminals of the Peltier effect module (35).

9. Process according to Claim 7, characterized in that the Seebeck component (Up) of the voltage (U) at the terminals of the Peltier effect module (35) is obtained by eliminating a variable component due to the internal resistance of the Peltier effect module (35) at the mean temperature of the said Peltier effect module (35) in the voltage (U) at its terminals.

10. Device for implementing the process according to any one of Claims 1 to 9, including: a sensitive element (2) able to be applied against the surface (1) and to take a temperature substantially equal to that of the surface (1); a means of heating (5, 7) and a means of cooling (4, 6) which are able to heat and respectively cool the said sensitive element (2); a means (3) of measuring the temperature of the sensitive element (2); a comparator of the temperature measured in the sensitive element (2) with upper and lower values fixed in advance; a control facility which triggers a phase of heating until the temperature of the sensitive element (2) has reached the upper value, then a phase of cooling until the temperature of the sensitive element (2) has reached the lower value; characterized in that the means of heating and the means of cooling exhibit the same thermal power; and in that the said device furthermore includes a clock for measuring the duration (t₀) of the heating phase and that (t₁) of the cooling phase,and a comparator for comparing the ratio of the duration of heating (t₀) to the rise in temperature during heating (ΔT) and the ratio of the duration of cooling (t₁) to the drop in temperature during cooling (2ΔT), the comparator warning of the risk of condensation in the event of an appreciable difference between these two ratios.

11. Device for implementing the process according to any one of Claims 1 to 9, characterized in that it includes a Peltier effect module (35) supplied with current (I) through an electronic circuit (36) which reverses the direction of the current (I) each time the Seebeck component (Up) of the voltage (U) at the terminals of the Peltier effect module (35) exceeds a predetermined value (Uc, Uf).
